# EUROPEAN PATENT APPLICATION

(11) **EP 4 316 781 A1**
(43) Date of publication of application: **07.02.2024**
(21) Application number: 22306164.9
(22) Date of filing: 01.08.2022
(51) Int. Cl.: B29C 64/118, B33Y 70/00

(54) **METHOD FOR MANUFACTURING AN ARTICLE BY MATERIAL ADDITIVE EXTRUSION PRINTING USING A RHEOLOGY MODIFIER**

(71) Applicant: ARKEMA FRANCE, 92700 Colombes (FR)
(72) Inventor: MORFIN, Alexis, SERQUIGNY (FR); LIU, David, KING OF PRUSSIA (US)
(74) Representative: Arkema Patent

(57) **Abstract**

A method of manufacturing an article by material additive extrusion printing, comprising:
- providing a thermoplastic polymer composition to a print head; and
- depositing the thermoplastic polymer composition from the print head onto a print bed to form the article;
wherein:
- the thermoplastic polymer composition comprises one or more thermoplastic polymers;
- the thermoplastic polymer(s) comprise(s) at least one semi-crystalline thermoplastic polymer, the proportion of the semi-crystalline thermoplastic polymer(s) among the thermoplastic polymer(s) being at least 50 wt.%;
- the thermoplastic polymer composition comprises a rheology modifier;
- the thermoplastic polymer composition has a glass transition temperature Tg; and
- the print bed and article being printed are in a build chamber, which is at a temperature greater than Tg - 10°C.

## Description

### Technical field

The present invention relates to a method for manufacturing an article by material additive extrusion printing, using a composition which comprises a rheology modifier.

### Technical background

Material extrusion additive manufacturing 3D printing (including fused filament fabrication) has emerged as a tool of choice for large scale production and quick thermoplastic prototyping. It is the easiest to operate and produces the least waste and shortest turnaround time among 3D printing technologies.

Document US 10,189,210 discloses a method for printing a three-dimensional part with an additive manufacturing system which includes providing a part material that compositionally has one or more semi-crystalline polymers and one or more secondary materials that are configured to retard crystallization of the one or more semi-crystalline polymers, where the one or more secondary materials are substantially miscible with the one or more semi-crystalline polymers.

Document US 2016/024293 relates to the use of a mixture comprising from 40 to 70 vol.% of an inorganic powder, from 30 to 60 vol.% of a binder comprising from 50 to 96 wt.% of at least one polyoxymethylene, from 2 to 35 wt.% of at least one polyolefin, from 2 to 40 wt.% of at least one further polymer, in a fused filament fabrication process.

Document US 2019/062577 relates to a method for forming a three dimensional object by fused filament fabrication comprising the step of selectively dispensing a polymer composition containing a semi-crystalline copolyamide in accordance with the shape of a portion of a three-dimensional object, characterized that the semi-crystalline copolyamide comprises at least 70 wt.% of aliphatic monomeric units derived from aminoacid, or diamine and diacid, and at least 0.5 wt.% of further monomeric units derived from a cyclic monomer.

Document US 2020/048414 relates to filaments and in particular filaments for use in fused filament fabrication to prepare 3D printed articles, the filaments being prepared from a polymer composition comprising from 55 to 95 wt.% of a semi-aromatic copolyamide and from 5 to 45 wt.% of an amorphous copolyimide.

Document WO 2018/075320 discloses filaments for use in fused filament fabrication to prepare 3D printed articles. The filaments comprise a polymer composition comprising about 5 to 60 wt.% of a thermoplastic polymer A having a melting peak temperature greater than 40°C; about 40 to 95 wt. % of a thermoplastic polymer B having a melting peak temperature greater than 20°C; optionally from about 0.1 to 3 wt.% of a viscosity modifier; wherein the melting peak temperature of thermoplastic polymer A is at least 20°C greater than the melting peak temperature of the thermoplastic polymer B.

Document WO 2019/081143 relates to a thermoplastic composition comprising an amorphous polyamide polymer for use in 3D printing.

Documents WO 2019/195689 and WO 2019/195694 both relate to additive manufacturing compositions comprising at least one semi-crystalline copolyamide and at least one amorphous copolyamide.

Document WO 2020/064825 discloses a sinter powder comprising a first polyamide component and a second polyamide component, where the melting point of the second polyamide component is higher than the melting point of the first polyamide component.

Document US 10,633,468 discloses a process for forming a 3D article by material extrusion manufacturing 3D printing, using a fluoropolymer composition.

Document US 2020/0276760 discloses a process for forming a 3D article by material extrusion manufacturing 3D printing, using a thermoplastic polymer composition comprising a random poly ether ketone ketone (PEKK) copolymer.

Document US 2020/0325323 discloses an acrylic alloy composition for use in material extrusion additive manufacturing, which comprises a polymer matrix blend comprising one or more acrylic polymers, one or more low viscosity polymers and optionally impact modifiers.

Document WO 2020/072746 discloses a 3D-printed article comprising a thermoplastic polymer, wherein said thermoplastic polymer has a cross-over temperature (G'/G") of less than 140°C and wherein the elongation to break in the XY direction is at least 50%.

Document WO 2020/2055565 discloses an acrylic polymer composition for use in 3-D printing, wherein said acrylic composition comprises a single matrix acrylic copolymer optionally alloyed with less than 5% other compatible, miscible or semi-miscible polymers, and optionally one or more additives dispersed within said matrix.

Document WO 2020/205568 discloses a material extrusion additive manufacturing process using an amorphous thermoplastic polymer composition having a glass transition temperature Tg, wherein the difference in temperature between the Tg and the internal temperature of a given printed dot or line of the thermoplastic polymer composition remains for at least 5 minutes following printing.

Generally, the use of thermoplastic compositions based on semi-crystalline materials for fused filament fabrication and similar techniques leads to issues of uneven shrinkage upon cooling and poor layer adhesion. It has proven difficult to obtain isotropic properties, as the mechanical performance in the Z direction is generally poor.

It is known to add fillers to the thermoplastic compositions, usually to increase stiffness (in the XY plane), decrease warping and improve the size of prints, but this generally worsens the anisotropy of the formed article, as the alignment of the fillers in the XY plane leads to reduced strength and elongation at break in the Z direction.

There is therefore a need for a method of manufacturing an article by material additive extrusion printing resulting in articles having improved mechanical properties both in the XY and Z directions, and having isotropic characteristics.

### Summary of the invention

It is a first object of the invention to provide a method of manufacturing an article by material additive extrusion printing, comprising:
- providing a thermoplastic polymer composition to a print head; and
- depositing the thermoplastic polymer composition from the print head onto a print bed to form the article;
wherein:
- the thermoplastic polymer composition comprises one or more thermoplastic polymers;
- the thermoplastic polymer(s) comprise(s) at least one semi-crystalline thermoplastic polymer, the proportion of the semi-crystalline thermoplastic polymer(s) among the thermoplastic polymer(s) being at least 50 wt.%;
- the thermoplastic polymer composition comprises a rheology modifier;
- the thermoplastic polymer composition has a glass transition temperature Tg; and
- the print bed and article being printed are in a build chamber, which is at a temperature greater than Tg - 10°C.

In some variations, the build chamber is at a temperature greater than Tg, or greater than Tg + 20°C or greater than Tg +40°C.

In some variations, the build chamber is at a temperature of at least 50°C, or at least 60°C, or at least 70°C, or at least 80°C.

In some variations, the rheology modifier is selected from silica, Aramid fibers, polyarylether ketone fibers, BaSO₄, talc, CaCO₃, optionally milled glass fibers, optionally milled carbon fibers, graphene, carbon nanotubes, glass beads, ceramic beads, hollow spheres, carbon black, wax and combinations thereof, and preferably is selected from glass fibers, carbon fibers, fumed silica, hydrophobic coated fumed silica and silicates.

In some variations, the thermoplastic polymer composition comprises from 2 to 20 wt.% rheology modifier, preferably from 5 to 12 wt.% rheology modifier.

In some variations, the thermoplastic polymer(s) consist(s) of the at least one semi-crystalline polymer.

In some variations, the semi-crystalline thermoplastic polymer(s) is(are) selected from polystyrene, polylactic acid, polyolefins, fluoropolymers, poly aryl ether ketones, polyphenylene sulfides, thermoplastic polyurethanes, polyamides and combinations thereof.

In some variations, the semi-crystalline thermoplastic polymer(s) is(are) selected from polyamides, and preferably PA 11, and poly aryl ether ketones, preferably poly ether ketone ketone.

In some variations, the ratio of the viscosity of the thermoplastic polymer composition, at a shear rate of 1 s⁻¹ and at a temperature of Tm + 50°C, to the viscosity of the thermoplastic polymer composition, at a shear rate of 100 s⁻¹ and at a temperature of Tm + 50°C, as measured by capillary rheometry, is at least 1.5, or at least 2, wherein Tm is a melting temperature of the thermoplastic polymer composition.

In some variations, the ratio of the viscosity of the thermoplastic polymer composition, at a shear rate of 1 s⁻¹ and at a temperature of Tm + 50°C, to the viscosity of the same thermoplastic polymer composition but devoid of rheology modifier, at a shear rate of 1 s⁻¹ and at temperature of Tm + 50°C, as measured by capillary rheometry, is at least 1.5, or at least 2, wherein Tm is a melting temperature of the thermoplastic polymer composition.

In some variations, the thermoplastic polymer composition is provided in the form of a filament and melted in the print head.

In some variations, the method does not comprise a post-deposition annealing step.

The present invention addresses the need of the prior art. In particular the invention provides a method of manufacturing an article by material additive extrusion printing resulting in articles having improved mechanical properties both in the XY and Z directions, and having isotropic characteristics.

This has been surprisingly achieved by using a specific printing condition, namely an elevated build chamber temperature, in combination with a particular material, namely a polymer composition based on a semi-crystalline polymer and comprising a rheology modifier. Without wishing to be bound to any theory, the addition of the rheology modifier is believed to modify the rheology of the thermoplastic polymer composition, making it possible to print at an elevated chamber temperature without impairing the resolution of the printed article. At this elevated chamber temperature, there is sufficient diffusion of the polymer chains to achieve entanglement, while the material still retains its shape owing to the rheology modifier.

### Description of embodiments

The invention will now be described in more detail without limitation in the following description.

The method of the invention uses a thermoplastic polymer composition. This thermoplastic polymer composition comprises at least one thermoplastic polymer and a rheology modifier.

### Thermoplastic polymer

The thermoplastic polymer in the composition comprises at least one semi-crystalline polymer.

Among the thermoplastic polymers in the thermoplastic polymer composition, the semi-crystalline polymer(s) are present in an amount of at least 50 wt.%, preferably at least 60 wt.%, or at least 70 wt.%, or at least 80 wt.%, or at least 90 wt.%, or at least 95 wt.%.

Preferably, a single semi-crystalline polymer is present.

The thermoplastic polymer may preferably consist essentially of, or consist of, the at least one semi-crystalline polymer. Alternatively, the thermoplastic polymer may also comprise one or more amorphous polymers, in addition to the one or more semi-crystalline polymers.

By *"semi-crystalline"* is meant a thermoplastic polymer having a melting enthalpy of at least 20 J/g, as measured by differential scanning calorimetry (DSC) pursuant to ASTM D3418-08 in the second heating run with a heating rate of 20°C/min. Suitably, the melting enthalpy is in the range of 20-150 J/g, more particularly in the range of 25-75 J/g.

By *"amorphous"* is meant a thermoplastic polymer which is not semi-crystalline.

The thermoplastic polymer in the composition (and in particular the semi-crystalline polymer) may comprise polystyrene, a polyacetal, a polyimide, polylactic acid, a polyolefin, a fluoropolymer, a poly aryl ether ketone (PAEK), a polyphenylene sulfide, a polyamide (including copolyamides), a thermoplastic elastomer (such as a polyether block amide or a thermoplastic polyurethane) or combinations thereof.

The thermoplastic polymers in the composition may comprise, or consist essentially of, or consist of polystyrene. For instance, semi-crystalline polystyrene may be present as the sole thermoplastic polymer in the composition.

The thermoplastic polymers in the composition may comprise, or consist essentially of, or consist of a polyacetal. For instance, semi-crystalline polyacetal may be present as the sole thermoplastic polymer in the composition.

The thermoplastic polymers in the composition may comprise, or consist essentially of, or consist of polyimide. For instance, semi-crystalline polyimide may be present as the sole thermoplastic polymer in the composition.

The thermoplastic polymers in the composition may comprise, or consist essentially of, or consist of, polylactic acid. For instance, semi-crystalline polylactic acid may be present as the sole thermoplastic polymer in the composition.

The thermoplastic polymers in the composition may comprise, or consist essentially of, or consist of, one or more polyolefin. For instance, one semi-crystalline polyolefin may be present as the sole thermoplastic polymer in the composition.

The polyolefin may be a homopolymer or copolymer. It may comprise, consist essentially of, or preferably consist of structural units derived from of C2-C8 alkene monomers, preferably C2-C4 alkene monomers. The alkene monomers may be linear or branched or unbranched. Examples of alkenes monomers include ethylene, propylene, 1-butene, 2-butene, 2-methyl-propene (isobutylene), 1-pentene, 2-pentene, 2-methyl-1-butene, 3-methyl-1-butene, 1-hexene, 2-hexene, 3-hexene and 4-methyl-1-pentene. Alkene monomers having two or more C-C double bonds may also be used, such as allene, 1,3-butadiene, 1,4-pentadiene, 1,3-pentadiene and 2-methyl-1,3-butadiene (i.e. isoprene).

The polyolefin may be linear or crosslinked. It is preferably linear.

Examples of preferred polyolefins are polymethylpentene, poly-1-butene, polyisobutylene, polyethylene and polypropylene. Particular preference is given to polyethylene and polypropylene and also their copolymers.

The thermoplastic polymers in the composition may comprise, or consist essentially of, or consist of, one or more fluoropolymers. For instance, one semi-crystalline fluoropolymer may be present as the sole thermoplastic polymer in the composition.

The fluoropolymer may comprise structural units derived from one or more of the following fluoromonomers: vinylidene fluoride (VDF), tetrafluoroethylene (TFE), trifluoroethylene (TrFE), chlorotrifluoroethylene (CTFE), dichlorodifluoroethylene, hexafluoropropene (HFP), vinyl fluoride (VF), hexafluoroisobutylene (HFIB), perfluorobutylethylene (PFBE), 1,2,3,3,3-penta-fluoropropene, 3,3,3-trifluoro-1-propene, 2-trifluoromethyl-3,3,3-trifluoropropene, 2,3,3,3-tetrafluoropropene, 1-chloro-3,3 3-trifluoropropene, fluorinated vinyl ethers including perfluoromethyl ether (PMVE), perfluoroethylvinyl ether (PEVE), perfluoropropylvinyl ether (PPVE), perfluorobutylvinyl ether (PBVE), longer chain perfluorinated vinyl ethers, fluorinated dioxoles, partially- or per-fluorinated alpha olefins of C4 and higher, partially- or per-fluorinated cyclic alkenes of C3 and higher, and combinations thereof.

The fluoropolymer may be a homopolymer or a copolymer. If it is a copolymer, it may comprise only structural units derived from at least two fluoromonomers, or it may also comprise structural units derived from other comonomers, such as olefins (in particular ethylene or propylene, or C4-C16 alpha-olefins), styrenics, acrylates, methacrylates, (meth)acrylic acid and salts therefrom, butadiene, isoprene, vinyl esters, vinyl ethers, non-fluorine-containing halogenated ethylene, vinyl pyridines, and N-vinyl linear and cyclic amides.

In some embodiments, the fluoropolymer contains a majority by weight of vinylidene fluoride (VDF) monomer units, preferably at least 65 weight percent VDF monomer units, and more preferably at least 75 weight percent of VDF monomer units. The fluoropolymer may in particular be a PVDF homopolymer, or a copolymer of VDF and at least one of HFP, TrFE, CFE, CTFE, fluorinated ethylene vinyl ether (FEVE), and (per)fluorinated ethylene-propylene (FEP).

The thermoplastic polymers in the composition may comprise, or consist essentially of, or consist of, one or more polyaryletherketones (PAEKs). For instance, one semi-crystalline PAEK may be present as the sole thermoplastic polymer in the composition.

By PAEK is meant a polymer having (-Ar-X-) as well as (-Ar'-Y-) structural units, wherein:
- Ar and Ar' are each a divalent aromatic radical;
- Ar and Ar' may preferably be selected from (optionally substituted) 1,3-phenylene, 1,4-phenylene, 4,4'-bisphenylene, 1,4-naphthylene, 1,5-naphthylene and 2,6-naphthylene;
- X is an electron withdrawer group which may preferably be selected from a carbonyl group or sulfonyl group;
- Y is selected from an oxygen atom, a sulfur atom, an alkylene group (such as -CH₂-) and isopropylidene.

Preferably, X is CO (carbonyl) and Y is O, so that the PAEK comprises, or essentially consists of, or preferably consists of, (-Ar-CO-) and (-Ar'-O-) structural units.

In particular, the PAEK may be a poly-ether-ketone-ketone (PEKK), comprising, or essentially consisting of, or preferably consisting of a succession of -(Ar₁-O-Ar₂-CO-Ar₃-CO)ₙ- structural units, wherein Ar₁, Ar₂ and Ar₃ are each independently a divalent aromatic radical, preferably phenylene, and n is an integer. The bonds on either side of each of Ar₁, Ar₂ and Ar₃ may have a para, meta or ortho positioning, preferably para or meta. More preferably, the PEKK may comprise structural units derived from isophthalic acid and/or from terephthalic acid.

Alternatively, the PAEK may be a poly-ether-ether-ketone (PEEK), comprising, or essentially consisting of, or preferably consisting of a succession of -(Ar₁-O-Ar₂-O-Ar₃-CO)ₙ- structural units, wherein Ar₁, Ar₂ and Ar₃ are each independently a divalent aromatic radical, preferably phenylene, and n is an integer. The bonds on either side of each of Ar₁, Ar₂ and Ar₃ may have a para, meta or ortho positioning, preferably para or meta.

Alternatively, the PAEK may be a poly-ether-ketone (PEK), comprising, or essentially consisting of, or preferably consisting of a succession of -(Ar₁-O-Ar₂-CO)ₙ- structural units, wherein Ar₁ and Ar₂ are each independently a divalent aromatic radical, preferably phenylene, and n is an integer. The bonds on either side of each of Ar₁ and Ar₂ may have a para, meta or ortho positioning, preferably para or meta.

Alternatively, the PAEK may be a poly-ether-ether-ketone-ketone (PEEKK), comprising, or essentially consisting of, or preferably consisting of a succession of -(Ar₁-O-Ar₂-O-Ar₃-CO-Ar₄-CO)ₙ- structural units, wherein Ar₁, Ar₂, Ar₃ and Ar₄ are each independently a divalent aromatic radical, preferably phenylene, and n is an integer. The bonds on either side of each of Ar₁, Ar₂, Ar₃ and Ar₄ may have a para, meta or ortho positioning, preferably para or meta.

Alternatively, the PAEK may be a poly-ether-ether-ether-ketone (PEEEK), comprising, or essentially consisting of, or preferably consisting of a succession of -(Ar₁-O-Ar₂-O-Ar₃-O-Ar₄-CO)ₙ- structural units, wherein Ar₁, Ar₂, Ar₃ and Ar₄ are each independently a divalent aromatic radical, preferably phenylene, and n is an integer. The bonds on either side of each of Ar₁, Ar₂, Ar₃ and Ar₄ may have a para, meta or ortho positioning, preferably para or meta.

Alternatively, the PAEK may be a poly-ether-ketone-ether-ketone-ketone (PEKEKK), comprising, or essentially consisting of, or preferably consisting of a succession of -(Ar₁-O-Ar₂-CO-Ar₃-O-Ar₄-CO-Ar₅-CO)ₙ- structural units, wherein Ar₁, Ar₂, Ar₃, Ar₄ and Ars are each independently a divalent aromatic radical, preferably phenylene, and n is an integer. The bonds on either side of each of Ar₁, Ar₂, Ar₃, Ar₄ and Ar₅ may have a para, meta or ortho positioning, preferably para or meta.

Alternatively, the PAEK may be a poly-ether-ether-ketone-ether-ketone (PEEKEK), comprising, or essentially consisting of, or preferably consisting of a succession of -(Ar₁-O-Ar₂-O-Ar₃-CO-Ar₄-O-Ar₅-CO)ₙ- structural units, wherein Ar₁, Ar₂, Ar₃, Ar₄ and Ar₅ are each independently a divalent aromatic radical, preferably phenylene, and n is an integer. The bonds on either side of each of Ar₁, Ar₂, Ar₃, Ar₄ and Ar₅ may have a para, meta or ortho positioning, preferably para or meta.

Alternatively, the PAEK may be a poly-ether-ether-ketone-ether-ketone (PEDEK), comprising, or essentially consisting of, or preferably consisting of a succession of -(Ar₁-O-D-O-Ar₂-CO)ₙ- structural units, wherein Ar₁ and Ar₂ are each independently a divalent aromatic radical, preferably phenylene, D is a diphenyl-derived divalent radical and n is an integer. The bonds on either side of each of Ar₁ and Ar₂ may have a para, meta or ortho positioning, preferably para or meta.

The thermoplastic polymers in the composition may comprise, or consist essentially of, or consist of, one or more polyphenylene sulfides. For instance, one semi-crystalline polyphenylene sulfide may be present as the sole thermoplastic polymer in the composition.

The thermoplastic polymers in the composition may comprise, or consist essentially of, or consist of, one or more thermoplastic polyurethanes. For instance, one semi-crystalline thermoplastic polyurethane may be present as the sole thermoplastic polymer in the composition.

A polyurethane is a polymer having carbamate units. Aliphatic polyurethanes are preferred. They can, for example, be prepared by polyaddition of aliphatic polyisocyanates and aliphatic polyhydroxy compounds. Among the polyisocyanates, diisocyanates of the general formula OCN-R-NCO are preferred, wherein R is a substituted or unsubstituted C1-C20 alkylene or C4-C20 cycloalkylene, wherein the substituents are selected from the group consisting of F, CI, Br and C1-C6-alkyl. Preferably R is a substituted or unsubstituted C2-C12 alkylene or C6-C15 cycloalkylene. The alkylene groups can be linear or branched.

Preferred diisocyanates are selected from the group consisting of hexamethylene diisocyanate, 2,2,4-trimethyl hexamethylene diisocyanate, 2,4,4-trimethyl hexamethylene diisocyanate, 1,2-diisocyanatomethyl cyclohexane, 1,4-diisocyanatomethyl cyclohexane and isophorone diisocyanate.

The diisocyanates may also be used in oligomeric, for example dimeric or trimeric form. Instead of the polyisocyanates, it is also possible to use conventional blocked polyisocyanates which are obtained from the stated isocyanates, for example by an addition reaction of phenol or caprolactam.

Suitable polyhydroxy compounds for the preparation of aliphatic polyurethanes are, for example, polyesters, polyethers, polyesteramides or polyacetals or mixtures thereof.

Suitable chain extenders for the preparation of the polyurethanes are low molecular weight polyols, in particular diols and polyamines, in particular diamines or water.

The polyurethanes are preferably essentially uncrosslinked.

The thermoplastic polymers in the composition may comprise, or consist essentially of, or consist of, one or more thermoplastic polyamides. For instance, one semi-crystalline polyamide may be present as the sole thermoplastic polymer in the composition.

The polyamide may be a homopolymer or copolymer derived from monomers that include caprolactams, aminoacids, or diamines and dicarboxylic acids. The diamine monomers and the dicarboxylic acid monomers are each preferably aliphatic monomers, and more preferably are each acyclic aliphatic monomers. However, in other embodiments, the diamine monomers and/or the dicarboxylic acid monomers may include aromatic or cycloaliphatic groups.

Furthermore, in some embodiments, the polyamide may include cyclic groups in grafted pendant chains (e.g., maleated groups). Preferred polyamides may have the formula (-NH-R₁-CO-)ₙ or (-NH-R₂-NH-CO-R₃-CO-)ₙ wherein n is an integer and R₁, R₂ and R₃ may each be a hydrocarbon chain having 3-12 carbon atoms. The hydrocarbon chains for R₁, R₂ and R₃ may be linear or branched, and are preferably aliphatic, acyclic, saturated hydrocarbon chains. R₁, R₂ and R₃ may be identical or not in successive repeating units.

Copolyamides include random copolymers, block copolymers, graft copolymers and combinations thereof.

Preferred polyamides include polycaprolactam (PA 6), polyhexamethyleneadipamide (PA 6.6), polyhexamethylenenonamide (PA 6.9), polyhexamethylenesebacamide (PA 6.10), polyenantholactam (PA 7), polyundecanamide (PA 11), polylaurolactam (PA 12), and mixtures thereof.

PA 11 is especially preferred.

Examples of suitable semi-crystalline polyamide(s) having aromatic groups include semi-crystalline polyamides of aliphatic diamines and isophthalic acid and/or terephthalic acid (e.g., semi-crystalline polyphtalamides).

Furthermore, in some variations, at least a portion of the polyamide(s) are graft semi-crystalline polyamide(s), each having a polyamide backbone and one or more impact modifiers grafted to the backbone. The impact modifiers may include polyolefin-chain monomers and/or elastomers having coupling groups configured to graft the monomers to the polyamide backbone. Suitable coupling groups for the impact modifiers include piperidine groups, acrylic/methacrylic acid groups, maleic anhydride groups, epoxy groups.

The thermoplastic polymers in the composition may comprise, or consist essentially of, or consist of, one or more polyether block amide. For instance, one semi-crystalline polyether block amide may be present as the sole thermoplastic polymer in the composition.

By *"polyether block amide"* is meant a copolymer comprising polyamide (PA) blocks and polyether (PE) blocks, or *"PEBA"* copolymer.

PEBAs result from the polycondensation of polyamide blocks comprising reactive end groups with polyether blocks comprising reactive end groups, such as, inter alia, the polycondensation:
1) of polyamide blocks comprising diamine chain ends with polyoxyalkylene blocks comprising dicarboxylic chain ends;
2) of polyamide blocks comprising dicarboxylic chain ends with polyoxyalkylene blocks comprising diamine chain ends;
3) of polyamide blocks comprising dicarboxylic chain ends with polyetherdiols, the products obtained being, in this specific case, polyetheresteramides.

The polyamide blocks may be homopolyamide or copolyamide blocks, as described above for the homopolyamide and copolyamide polymers.

The polyamide blocks comprising dicarboxylic chain ends originate, for example, from the condensation of precursors of polyamides in the presence of a chain-limiting dicarboxylic acid. The polyamide blocks comprising diamine chain ends originate, for example, from the condensation of precursors of polyamides in the presence of a chain-limiting diamine.

The polyether blocks can in particular be PEG (polyethylene glycol) blocks, that is to say consisting of ethylene oxide units, and/or PPG (propylene glycol) blocks, that is to say consisting of propylene oxide units, and/or PO3G (polytrimethylene glycol) blocks, that is to say consisting of polytrimethylene glycol ether units, and/or PTMG blocks, that is to say consisting of tetramethylene glycol, also called polytetrahydrofuran, units. PTMG blocks are preferred.

The PEBAs can comprise units which are randomly distributed. These polymers can be prepared by the simultaneous reaction of the polyether and the precursors of the polyamide blocks.

The polyetherdiol blocks are either used as is and copolycondensed with polyamide blocks having carboxyl end groups, or aminated in order to be converted into polyetherdiamines and condensed with polyamide blocks having carboxylic end groups. They can also be mixed with polyamide precursors and a chain limiter to make polymers PEBAs having randomly distributed units.

The thermoplastic polymers in the composition may comprise, or consist essentially of, or consist of, a mixture of one or polyamides (as described above) and one or more PEBAs (as described above), such as a mixture of one polyamide and one PEBA.

In this case, the ratio of the amount of PEBA to the amount of polyamide can advantageously be between 1/99 and 15/85 by weight.

The thermoplastic polymers in the composition may comprise, or consist essentially of, or consist of, a mixture of one or polyamides (as described above) and one or more other polymers, such as a mixture of one polyamide and one other polymer. By way of example of this other polymer, mention may be made of polyolefins, polyesters, polycarbonates, polyphenylene oxide, polyphenylene sulfide and elastomers.

The thermoplastic polymers in the composition may comprise at least one polyamide (including copolyamides) and/or PEBA comprising at least one of the following XY or Z monomers: 46, 4T, 54, 59, 510, 512, 513, 514, 516, 518, 536, 6, 64, 66, 69, 610, 612, 613, 614, 616, 618, 636, 6T, 9, 104, 109, 1010, 1012, 1013, 1014, 1016, 1018, 1036, 10T, 11, 12, 124, 129, 1210, 1212, 1213, 1214, 1216, 1218, 1236, 12T, MXD6, MXD10, MXD12, MXD14, and mixtures thereof. Preferred are PA 6, PA 11, PA 12, PA 612, PA 613, PA 912, PA 1010, PA1012 6, PA 6/12, PA 11/1010, and mixtures thereof.

### Rheology modifier and other components of the thermoplastic polymer composition

By *"rheology modifier*" is meant a substance which increases the viscosity of the composition at low shear, such as 1 s⁻¹.

In some embodiments, the rheology modifier is also a filler.

In preferred embodiments, the rheology modifier is an inorganic substance.

In some embodiments, the rheology modifier is a thixotropic agent, i.e. an agent that makes the composition thixotropic (or more thixotropic). Thixotropy is characterized by a decrease in viscosity as a function of increasing shear rate.

The rheology modifier may be selected from carbon fibers or nanofibers, glass fibers, basalt fibers, Aramid fibers, polyarylether ketone fibers, (optionally hollow) glass beads, ceramic spheres, talc, BaSO₄, CaCO₄, mica, alumina, silicon carbide, zirconium tungstate, metals, graphene, carbon nanotubes, carbon powders, graphite, graphene, titanium dioxide, clays (such as bentonite), silica (such as fumed silica and hydrophobic coated fumed silica), nano-silica, silicates (such as organophilic phyllosilicates), cellulose, wood particles, wax (such as fatty-acid based wax) and combinations thereof.

The rheology modifier may preferably comprise or consist of fibers. Alternatively, the rheology modifier can be in the form of platelets, beads or particles.

When the rheology modifier comprises fibers, said fibers may be milled.

The rheology modifier, especially, when in the form of fibers, is preferably sized, i.e. coated to promote wetting by the polymer(s) of the composition. Sizing may in particular be carried out using an aminosilane.

The average length of the fibers may preferably be from 0.1 to 1000 µm, more preferably from 50 to 500 µm, most preferably from 100 to 300 µm. This range of length is believed to be favorable to avoid the breaking up of polymer networks and promote the diffusion of polymer chains between layers during printing. The average length can be determined by optical microscopy by counting and measuring fibers in a representative sample, taking into accounts for example all fibers having a diameter of 5-20 µm with a length-to-diameter ratio between 200 and 2.

The amount of rheology modifier in the thermoplastic polymer composition may range for example from 0.1 to 35 wt.%, preferably from 0.5 to 30 wt.%, more 1 to 25 wt.%, more preferably from 2 to 20 wt.%, more preferably from 3 to 15 wt.%, even more preferably from 4 to 12 wt.%, and typically from 5 to 10 wt.% (relative to the total weight of the composition).

The thermoplastic polymer composition may also comprise one or more additives, in particular selected from impact modifiers, pigments, dyes, processing aids, antioxidants, stabilizers, antistatic agents, surfactants, toner, refractive index matching additives, flame retardants, additives with specific light diffraction or light reflection characteristics, dispersing aids and combinations thereof. The impact modifiers may be for example selected from sulfonamides and thermoplastic elastomers (such as styrene-ethylene-butylene-styrene copolymers).

The amount of additives in the thermoplastic polymer composition may range for example from 0 to 10 wt.%, preferably from 0.1 to 5 wt.%, more preferably from 0.2 to 2 wt.% (relative to the total weight of the composition).

### Properties of the thermoplastic polymer composition

The glass transition temperature Tg of the thermoplastic polymer composition can be measured by differential scanning calorimetry (DSC) in accordance with ASTM D3418-08 or ISO 11357:2-2020 or by dynamic mechanical analysis (DMA) in accordance with ISO 6721-11:2019. The heating rate can be set to 20°C/min and the measurement is performed in the second heating run.

The crystallization temperature Tc of the thermoplastic polymer composition can be measured by differential scanning calorimetry (DSC) in accordance with ASTM D3418-08 or ISO 11357:3-2018. The cooling rate can be set to 20°C/min and the measurement is performed in a cooling run following a first heating run.

Preferably, the difference between Tc and Tg is greater than 50°C, more preferably greater than 75°C, or greater than 100°C, or greater than 110°C. For example, the difference between Tc and Tg may be from 50 to 200°C. A large difference between Tc and Tg is advantageous as it makes the adjustment of the parameters of the method of the invention easier.

The nature and amount of the rheology modifier can be selected in order to desirably adjust the rheology of the thermoplastic polymer composition. Without rheology modifier, the viscosity of a thermoplastic polymer composition normally plateaus at a low shear rate. By adding a rheology modifier, the viscosity generally increases, and the viscosity plateau at low shear is removed. This is believed to be advantageous for obtaining the desired isotropy of the article.

The absence of a plateau at low shear can be characterized by the ratio of the viscosity of the thermoplastic polymer composition at a shear rate of 1 s⁻¹ and at a temperature of 240°C to the viscosity of the thermoplastic polymer composition at a shear rate of 100 s⁻¹ and at the same temperature of 240°C. This ratio is preferably at least 1.5, or at least 2, or at least 5, or at least 10, or at least 20. It can be in particular from 1.5 to 100.

The overall viscosity increase (at low shear rate) due to the presence of the rheology modifier can be characterized by the ratio of the viscosity of the thermoplastic polymer composition at a shear rate of 1 s⁻¹ and at a temperature of 240°C to the viscosity of the thermoplastic polymer composition devoid of rheology modifier at the same shear rate of 1 s⁻¹ and at the same temperature of 240°C. This ratio is preferably at least 1.5, or at least 2, or at least 5, or at least 10, or at least 20. It can be in particular from 1.5 to 100.

The ratio of the viscosity of the thermoplastic polymer composition at a shear rate of 1 s⁻¹ and at a temperature of 280°C to the viscosity of the thermoplastic polymer composition at a shear rate of 100 s⁻¹ and at the same temperature of 280°C is preferably at least 1.5, or at least 2, or at least 5, or at least 10, or at least 20. It can be in particular from 1.5 to 100.

The ratio of the viscosity of the thermoplastic polymer composition at a shear rate of 1 s⁻¹ and at a temperature of 280°C to the viscosity of the thermoplastic polymer composition devoid of rheology modifier at the same shear rate of 1 s⁻¹ and at the same temperature of 280°C is preferably at least 1.5, or at least 2, or at least 5, or at least 10, or at least 20. It can be in particular from 1.5 to 100.

When semi-crystalline polymers are used which have a high melting temperature, the above reference temperatures should be modified. Therefore, the following more general properties may be used.

The ratio of the viscosity of the thermoplastic polymer composition at a shear rate of 1 s⁻¹ and at a temperature of Tm + 50°C to the viscosity of the thermoplastic polymer composition at a shear rate of 100 s⁻¹ and at the same temperature of Tm + 50°C is preferably at least 1.5, or at least 2, or at least 5, or at least 10, or at least 20. It can be in particular from 1.5 to 100.

The ratio of the viscosity of the thermoplastic polymer composition at a shear rate of 1 s⁻¹ and at a temperature of Tm + 50°C to the viscosity of the thermoplastic polymer composition devoid of rheology modifier at the same shear rate of 1 s⁻¹ and at the same temperature of Tm + 50°C is preferably at least 1.5, or at least 2, or at least 5, or at least 10, or at least 20. It can be in particular from 1.5 to 100.

The ratio of the viscosity of the thermoplastic polymer composition at a shear rate of 1 s⁻¹ and at a temperature of Tm + 90°C to the viscosity of the thermoplastic polymer composition at a shear rate of 100 s⁻¹ and at the same temperature of Tm + 90°C is preferably at least 1.5, or at least 2, or at least 5, or at least 10, or at least 20. It can be in particular from 1.5 to 100.

The ratio of the viscosity of the thermoplastic polymer composition at a shear rate of 1 s⁻¹ and at a temperature of Tm + 90°C to the viscosity of the thermoplastic polymer composition devoid of rheology modifier at the same shear rate of 1 s⁻¹ and at the same temperature of Tm + 90°C is preferably at least 1.5, or at least 2, or at least 5, or at least 10, or at least 20. It can be in particular from 1.5 to 100.

In the above paragraphs, Tm is the melting temperature of the thermoplastic polymer composition, which can be measured by differential scanning calorimetry (DSC) in accordance with ASTM D3418-08 or ISO 11357:3-2018.

The viscosity of the thermoplastic polymer composition at 240°C may for example range from 100 Pa.s to 10000 Pa.s, preferably from 200 Pa.s to 2000 Pa.s, at 100 s⁻¹; and from 150 Pa.s to 100000 Pa.s, preferably from 200 Pa.s to 10000 Pa.s at 1 s⁻¹.

The viscosity of the thermoplastic polymer composition at Tm + 50°C may for example range from 100 Pa.s to 10000 Pa.s, preferably from 200 Pa.s to 2000 Pa.s, at 100 s⁻¹; and from 150 Pa.s to 100000 Pa.s, preferably from 200 Pa.s to 10000 Pa.s at 1 s⁻¹.

The viscosity of the thermoplastic polymer and of the thermoplastic polymer composition may be measured by oscillatory rheometer according to ASTM D4440-15.

### Method and assembly for the implementation of the method

The method of the invention makes use of the above-described thermoplastic polymer composition in the form of consumable material in the ready to print form. More particularly, the composition is provided as a filament, as pellets, as a powder, as flakes, or as a polymer solution. Pellets and filaments may be produced by extruding the thermoplastic polymer composition.

Preferably, it is provided as a filament.

For fused filament fabrication, the filament may be of any size diameter, including from about 0.6 to 3 mm, preferably about 1.7 to 2.9 mm, more preferably diameters of about 1.7 mm and about 2.8 mm, even more preferably 1.75 mm, 2.85 mm; or other sizes, measured with an unweighted caliper. The filament may be extruded with any sized nozzle device.

The filament may be a single strand of the thermoplastic polymer composition, or may be in the form of a coextruded multi-phase filament. A multi-phase filament can formed with two or more concentric layers. For example, an amorphous polymer may form the outside layer, with one or more crystalline or semi-crystalline polymers on the inside. Alternatively, an inner and outer layer may have different levels of rheology modifier, polymers, or both. Alternatively, the filament may have an islands-in-the-sea configuration, wherein discrete domains made of one phase are dispersed in a matrix made of another phase. If a multi-phase filament is used, the composition of the thermoplastic polymer composition is understood to correspond to the totality of all phases or layers in combination

The method of the invention can be implemented in a printing assembly which generally comprises all or some of the following components:
- one or more print heads, each print head having a nozzle that can be heated up or cooled down to a specified temperature (in the following, it will be considered that only one print head is present, but the method is implemented in a similar manner in case two or more print heads are present);
- a device for feeding the consumable material to the print head;
- a print bed or substrate which may optionally be heated, where the article is being built/printed; and
- a build chamber surrounding the print bed and the article being printed, which is temperature-controlled.

The method of the invention generally comprises one or more of the following steps:
- setting computer controls of the printing assembly to provide a set volume flow of material, and to space the printed lines at a certain spacing;
- feeding the consumable material to at least one print head at an appropriate set speed;
- moving the print head relative to the print bed for depositing a set amount of thermoplastic polymer composition onto the print bed.

The print bed may be fixed while the print head is movable, or the opposite.

The article is formed by depositing successive layers of material on the print bed. Each layer is formed by adjacent lines of material deposited by the print head. The print bed is a plate which is generally planar. This makes it possible to define an XY plane. The Z direction is defined as the direction orthogonal to the XY plane. The successive layers of material mainly extend in the XY plane and have a thickness in the Z direction.

The build chamber is an enclosure comprising one or more walls surrounding the print bed and the article being printed. The print head is generally also in the build chamber. With higher temperature (> 120°C) capable build chambers, only the heating elements of the print head may be in the chamber while the feeding mechanism and moving mechanisms of the print heat may be outside the chamber, separated by a baffle. The build chamber contains air or another gas, especially an inert gas such as nitrogen, which surrounds the print bed and the article being printed. The air or gas in the build chamber may be at atmospheric pressure or at a different pressure, especially at a pressure below atmospheric pressure.

According to the invention, the build chamber is temperature-controlled. More particularly, the build chamber is heated to a set temperature. By *"temperature of the build chamber"* is meant the average temperature of the air contained in the build chamber. This temperature can be monitored owing to one or more temperature sensors placed in the chamber. When more than one sensors are used, the temperature in question is the average temperature based on the various sensed temperatures. The temperature sensors may in particular surround the print head and/or be mounted on the print head, for example in a position opposite to the nozzle. The temperature measurement may be input to a controller. The controller may send instructions to a temperature-adjusting system. The temperature-adjusting system may include for instance one or more resistor heaters, one or more radiators included in a refrigerant circuit, and/or one or more Peltier modules. The build chamber may include one or more fans.

The temperature of the build chamber is set to at least Tg - 10°C. Preferably, the temperature of the build chambre may be set to at least Tg - 5°C; or at least Tg; or at least Tg + 5°C; or at least Tg + 10°C; or at least Tg + 20°C; or at least Tg + 30°C; or at least Tg + 40°C; or at least Tg + 50°C. In some variations the temperature of the build chamber may be comprised between Tg - 10°C and Tg + 150°C, or between Tg and Tg + 100°C.

Advantageously, the temperature of the build chamber is lower than Tc, preferably lower than Tc - 10°C, or lower than Tc - 20°C, or lower than Tc - 30°C, or lower than Tc - 40°C, or lower than Tc - 50°C.

By way of example, the temperature of the build chamber may be from Tg - 10°C to Tc, preferably from Tg to Tc, more preferably from Tg + 10°C to Tc - 10°C, or from Tg + 20°C to Tc - 20°C, or from Tg + 30°C to Tc - 30°C, or from Tg + 40°C to Tc - 40°C, or from Tg + 50°C to Tc - 50°C.

In some variations, the temperature of the build chamber is at least 30°C, or at least 35°C, or at least 40°C, or at least 45°C, or at least 50°C, or at least 55°C, or at least 60°C, or at least 65°C, or at least 70°C, or at least 75°C, or at least 80°C, or at least 85°C, or at least 90°C. In some variations the temperature of the build chamber may be comprised between 30 and 150°C, or between 40 and 100°C. Depending on the nature of the semi-crystalline thermoplastic polymers which are used, the temperature of the build chamber may be higher, such as from 155°C to 270°C (for example when PEKK is used).

The nozzle of the print head may also be temperature controlled, i.e. the temperature of the nozzle may be set to a predetermined value. The temperature of the nozzle can be monitored owing to one or more temperature sensors in contact with, or embedded in, a heating block connected to the nozzle. When more than one sensors are used, the temperature in question is the average temperature based on the various sensed temperatures. Preferably, the temperature is measured at a single temperature sensor, which is the sensor closest to the nozzle tip among the various temperature sensors of the printing assembly. The temperature measurement may be input to a controller. The controller may send instructions to a temperature-adjusting system. The temperature-adjusting system may include for instance one or more resistor heaters, one or more radiators included in a refrigerant circuit, and/or one or more Peltier modules.

In some variations, the temperature of the nozzle is from 180 to 400°C, preferably from 200 to 350°C, more preferably from 220 to 320°C, even more preferably from 250 to 300°C. Depending on the nature of the semi-crystalline thermoplastic polymers which are used, the temperature of the nozzle may be higher, such as from 350°C to 400°C (for example when PEKK is used).

The print bed may also be temperature controlled, i.e. the temperature of the print bed may be set to a predetermined value. The temperature of the print bed can be monitored owing to one or more temperature sensors in contact with, or embedded in, the print bed. When more than one sensors are used, the temperature in question is the average temperature based on the various sensed temperatures. The temperature measurement may be input to a controller. The controller may send instructions to a temperature-adjusting system. The temperature-adjusting system may include for instance one or more resistor heaters, one or more radiators included in a refrigerant circuit, and/or one or more Peltier modules.

In some variations, the temperature of the print bed is from 50 to 150°C, preferably from 70 to 140°C, more preferably from 80 to 130°C, even more preferably from 90 to 120°C. Depending on the nature of the semi-crystalline thermoplastic polymers which are used, the temperature of the print bed may be higher, such as from 150°C to 160°C (for example when PEKK is used).

Different controllers can be used to control the temperature of the build chamber, print bed and nozzle. Alternatively, the same controller can be used to control all of these temperatures.

In some variations, the printer assembly may be programmed to operate with an overflow, such as for example a 105 to 150% overflow. This means that the volume of thermoplastic polymer composition fed by the printer is higher than the calculated volume required for the article being formed. Overflow may be controlled to result in a denser and mechanically stronger part. Overflow also helps to compensate for shrinkage, while increasing the strength and mechanical properties of the printed article. The overflow can be set by at least two different methods. In the first method, the software/printer is set to feed a higher percent of material into the nozzle than would be normally needed. In the second method, the software/printer may be set to decrease the spacing between lines, and thus create an overlap in the lines, resulting in extra material being used to print the article.

During printing, the speed of print head relative to the print bed may be for example from approximately 10 to 200 mm/s.

The thickness of each printed layer may be from 0.1 to 4 mm, preferably from 0.2 to 3 mm, more preferably from 0.3 to 2 mm, most preferably from 0.4 to 1 mm.

After printing, the article may be subjected to a post-treatment step, such as a heating or annealing step, which may in particular increase the crystallinity of the article. For example, the article may be placed in an oven at a temperature and for a period of time sufficient to increase the crystallinity of the article. Optionally, the post-treatment step can comprise or consist in maintaining the formed article in the build chamber after printing, while optionally raising the temperature of the build chamber. The post-treatment may include a single or multiple temperature steps having a duration from about 1 minute to 24 hours, preferably from about 3 minutes to 3 hours, more preferably from about 10 minutes to 60 minutes per temperature step. Preferably, the post-treatment may be a multistep temperature step process, the temperature being gradually increased from one step to the next.

However, more preferably, the article is not subjected to such an annealing step. This is made possible by using a thermoplastic polymer composition wherein a majority (and preferably the entirety) of the thermoplastic polymer is semi-crystalline.

### Characteristics of the article produced by the method of the invention

The article produced with the method of the invention may have a Z direction elongation at break greater than about 20%, preferably greater than about 30%, more preferably greater than about 40%, 50%, 60%, 70%, 80%, 90% or more, of the elongation at break in the XY plane of the same article produced in exactly the same manner but for the absence of rheology modifier in the composition.

The article produced with the method of the invention may have a Z direction tensile strength greater than about 20%, preferably greater than about 30%, more preferably greater than about 40%, 50%, 60%, 70%, 80%, 90% or more, of the tensile strength in the XY plane of the same article produced in exactly the same manner but for the absence of rheology modifier in the composition.

The tensile strength and elongation at break can be measured according to the ASTM D638 standard.

### Examples

Articles were made by fused filament fabrication using a Intamsys HT printer. Two filament compositions were used:
- Filament A: PA11 having a Tg of 46°C (DSC measurement according to ASTM D3418-08, second heating run).
- Filament B: same PA11 as in filament A compounded with 8 wt.% of glass fibers with aminosilane sizing (average diameter: 11 µm, average length: 100 µm).

The viscosity of these two compositions was determined as follows:
- A : Melt viscosity at 240°C/100 s⁻¹ = 504 Pa.s
- A : Melt viscosity at 240°C/1 s⁻¹ = 671 Pa.s
- A : Melt viscosity at 280°C/100 s⁻¹ = 259 Pa.s
- A : Melt viscosity at 280°C/1 s⁻¹ = 348 Pa.s
- B : Melt viscosity at 240°C/100 s⁻¹ = 924 Pa.s
- B : Melt viscosity at 240°C/1 s⁻¹ = 1460 Pa.s
- B : Melt viscosity at 280°C/100 s⁻¹ = 450 Pa.s
- B : Melt viscosity at 280°C/1 s⁻¹ = 716 Pa.s

The following ratios can thus be calculated:

| | A | B |
|---|---|---|
| Ratio of viscosity at 1 s⁻¹ to viscosity at 100 s⁻¹ at 240°C | 1.33 | 1.58 |
| Ratio of viscosity at 1 s⁻¹ to viscosity at 100 s⁻¹ at 280°C | 1.34 | 1.59 |

The ratio of the viscosity of B at 1 s⁻¹ / 240°C to the viscosity of A at 1 s⁻¹ / 240°C is 2.18.

The ratio of the viscosity of B at 1 s⁻¹ / 280°C to the viscosity of A at 1 s⁻¹ / 280°C is 2.06.

Two sorts of articles were made: the 3DBenchy model, in order to test the accuracy of the printing method; and tensile specimens of type I (length of 82 mm for testing the tensile strength in the Z direction) and type IV (length of 115 mm for testing the tensile strength in the XY direction).

Three sets of printing conditions were used:

| | Condition A1 | Condition A2 | Condition A3 | Condition B1 | Condition B2 | Condition B3 |
|---|---|---|---|---|---|---|
| Filament | A | A | A | B | B | B |
| T of print bed | 100°C | 100°C | 100°C | 100°C | 100°C | 100°C |
| T of build chamber | 40°C | 40°C | 80°C | 40°C | 40°C | 80°C |
| T of nozzle | 250°C | 280°C | 280°C | 250°C | 280°C | 280°C |
| Print speed | 25 mm/min | 25 mm/min | 25 mm/min | 25 mm/min | 25 mm/min | 25 mm/min |

The articles produced with these three sets of conditions were evaluated as follows: the XY and Z tensile strength were measured according to ASTM D638; the XY and Z elongation at break was also measured according to ASTM D638; the resolution was visually assessed. The results are presented in the table below:

| Condition | A1 | A2 | A3 | B1 | B2 | B3 |
|---|---|---|---|---|---|---|
| Resolution | Good | Average | Poor | Good | Good | Good |
| XY tensile strength (MPa) | 39 ±3 | 43 ± 3 | 40 ± 2 | 45 ± 2 | 53 ± 2 | 48 ± 2 |
| Z tensile strength (MPa) | 23 ± 3 | 31 ± 4 | N/A | 5 ± 1 | 15 ± 2 | 41 ± 2 |
| Z tensile strength / XY (without fibers) tensile strength ratio | 0.59 | 0.72 | N/A | 0.13 | 0.35 | 1.05 |
| XY elongation at break (%) | 190 ± 50 | 70 ± 10 | 55 ± 10 | 24 ± 10 | 30 ± 5 | 31 ± 4 |
| Z elongation at break (%) | 4 ±2 | 7 ± 2 | N/A | 0.9 ±0.1 | 6.5 ±0.7 | 21 ± 7 |

It should finally be noted that filament A cannot be applied with a build chamber temperature of 80°C, as resolution is completely lost at this temperature.

Because the fibers were aligned only in the XY plane and not in the Z direction plane during printing, a specific ratio was looked at, namely the Z tensile strength / XY (without fibers) tensile strength ratio, to characterize the Z direction properties of the material and compared it to the XY direction (or best case scenario) properties of the comparative material. This provides insight into the potential entanglement and layer adhesion of the polymer which can diffuse across the layers as opposed to the fibers which cannot. Note that the fiber-containing material when printed in condition B3 has the same Z direction property as the material not containing fibers in the XY direction, indicating that the polymer matrix has fully entangled across the layers as if the polymer (unfilled) were printed in the XY direction of A3 condition. In addition, this material (B) when printed in the B3 condition demonstrates yielding and has an elongation at break above yield (~7%).

## Claims

1. A method of manufacturing an article by material additive extrusion printing, comprising:
- providing a thermoplastic polymer composition to a print head; and
- depositing the thermoplastic polymer composition from the print head onto a print bed to form the article;
wherein:
- the thermoplastic polymer composition comprises one or more thermoplastic polymers;
- the thermoplastic polymer(s) comprise(s) at least one semi-crystalline thermoplastic polymer, the proportion of the semi-crystalline thermoplastic polymer(s) among the thermoplastic polymer(s) being at least 50 wt.%;
- the thermoplastic polymer composition comprises a rheology modifier;
- the thermoplastic polymer composition has a glass transition temperature Tg; and
- the print bed and article being printed are in a build chamber, which is at a temperature greater than Tg - 10°C.

2. The method of claim 1, wherein the build chamber is at a temperature greater than Tg, or greater than Tg + 20°C or greater than Tg +40°C.

3. The method of claim 1 or 2, wherein the build chamber is at a temperature of at least 50°C, or at least 60°C, or at least 70°C, or at least 80°C.

4. The method of any one of claims 1 to 3, wherein the rheology modifier is selected from silica, Aramid fibers, polyarylether ketone fibers, BaSO₄, talc, CaCO₃, optionally milled glass fibers, optionally milled carbon fibers, graphene, carbon nanotubes, glass beads, ceramic beads, hollow spheres, carbon black, wax and combinations thereof, and preferably is selected from glass fibers, carbon fibers, fumed silica, hydrophobic coated fumed silica and silicates.

5. The method of any one of claims 1 to 4, wherein the thermoplastic polymer composition comprises from 2 to 20 wt.% rheology modifier, preferably from 5 to 12 wt.% rheology modifier.

6. The method of any one of claims 1 to 5, wherein the thermoplastic polymer(s) consist(s) of the at least one semi-crystalline polymer.

7. The method of any one of claims 1 to 6, wherein the semi-crystalline thermoplastic polymer(s) is(are) selected from polystyrene, polylactic acid, polyolefins, fluoropolymers, poly aryl ether ketones, polyphenylene sulfides, thermoplastic polyurethanes, polyamides and combinations thereof.

8. The method of any one of claims 1 to 7, wherein the semi-crystalline thermoplastic polymer(s) is(are) selected from polyamides, and preferably PA 11, and poly aryl ether ketones, preferably poly ether ketone ketone.

9. The method of any one of claims 1 to 8, wherein the ratio of the viscosity of the thermoplastic polymer composition, at a shear rate of 1 s⁻¹ and at a temperature of Tm + 50°C, to the viscosity of the thermoplastic polymer composition, at a shear rate of 100 s⁻¹ and at a temperature of Tm + 50°C, as measured by capillary rheometry, is at least 1.5, or at least 2, wherein Tm is a melting temperature of the thermoplastic polymer composition.

10. The method of any one of claims 1 to 9, wherein the ratio of the viscosity of the thermoplastic polymer composition, at a shear rate of 1 s⁻¹ and at a temperature of Tm + 50°C, to the viscosity of the same thermoplastic polymer composition but devoid of rheology modifier, at a shear rate of 1 s⁻¹ and at temperature of Tm + 50°C, as measured by capillary rheometry, is at least 1.5, or at least 2, wherein Tm is a melting temperature of the thermoplastic polymer composition.

11. The method of any one of claims 1 to 10, wherein the thermoplastic polymer composition is provided in the form of a filament and melted in the print head.

12. The method of any one of claims 1 to 11, which does not comprise a post-deposition annealing step.
